# EUROPÄISCHE PATENTSCHRIFT

(11) **EP 2 759 233 B1**
(45) Veröffentlichungstag und Bekanntmachung des Hinweises auf die Patenterteilung: **09.09.2015**
(21) Anmeldenummer: 14000285.8
(22) Anmeldetag: 28.01.2014
(51) Int. Cl.: A47J 27/08

(54) **Deckel für einen Schnellkochtopf**
Lid for a pressure cooker
Couvercle pour un autocuiseur

(30) Priorität: 28.01.2013 DE 102013001370
(43) Veröffentlichungstag der Anmeldung: 30.07.2014
(73) Patentinhaber: BEEM, 61191 Rosbach v.d.H. (DE)
(72) Erfinder: Mehshat, Bijan, 61273 Wehrheim (DE)
(74) Vertreter: Hebing, Norbert

(56) Entgegenhaltungen:
- EP-A1- 2 204 111
- WO-A1-2012/053996
- DE-C- 587 324

## Beschreibung

Die Erfindung bezieht sich auf einen Deckel für einen Schnellkochtopf mit zwei am Rand des Deckels angeordneten Klammern, die in radialer Richtung gegenüber dem Deckel zwischen einer eingefahrenen und einer ausgefahrenen Position verfahrbar sind, wobei in der eingefahrenen Position die Klammern den Rand des Deckels übergreifen und einen Flansch am Schnellkochtopf untergreifen, so dass der Deckel am Schnellkochtopf gehalten ist, und in der ausgefahrenen Position die Klammern vom Deckel und dem Flansch beabstandet sind, so dass der Deckel vom Schnellkochtopf entfernbar ist, mit einem Verstellmechanismus, um die Klammern zu verfahren, und mit einem auf den Verstellmechanismus einwirkenden Bügel, der auf dem Deckel um eine parallel zur Deckelausdehnung verlaufende Schwenkachse schwenkbar angeordnet ist, wobei der Bügel eine erste eingeklappte Stellung, die der eingefahrenen Position der Klammern entspricht, und eine aufgestellte Stellung einnehmen kann, die der ausgefahrenen Position der Klammern entspricht und in der er von den Fingern einer Hand untergriffen werden kann.

Ein derartiger Deckel ist in der EP 2 204 111 B1 beschrieben. In der aufgestellten Stellung liegt der Bügel an einem Anschlag an, so dass er allenfalls zurück in die eingeklappte Stellung, in der die Klammern eingefahren sind, zurückbewegt werden kann. Wenn der Schnellkochtopf nicht benutzt wird und in einem Regalfach oder einer Schublade verstaut ist, sollte der Bügel schon aus Platzgründen nicht vorstehen. In der eingeklappten Position ist aber der Deckel auf dem Schnellkochtopf verriegelt, so dass das Innere des Schnellkochtopfes nicht ausreichend belüftet wird oder die Klammern liegen auf dem Flansch auf, was ebenfalls aus Platzgründen nicht gewünscht ist.

Die Erfindung beruht daher auf dem Problem, einen Verstellmechanismus zu schaffen, der ein Platz sparendes Verstauen des Schnellkochtopfes mit einem aufgesetzten Deckel ermöglicht, ohne dass dabei der Schnellkochtopf hermetisch verschlossen wäre.

Zur Lösung des Problems sieht die Erfindung vor, dass der Bügel eine zweite eingeklappte Stellung einnehmen kann, die der ersten Stellung gegenüberliegt und die der oder einer weiteren ausgefahrenen Position der Klammern entspricht.

In der zweiten eingeklappten Stellung steht somit der Bügel nicht vom Deckel ab und die Klammern befinden sich jeweils nicht in einer Position, in der sie den Flansch des Schnellkochtopfes untergreifen würden, wenn der Deckel sich auf dem Schnellkochtopf befindet. Der nicht vom Deckel hermetisch geschlossene Schnellkochtopf kann somit in ein Regalfach oder eine Schublade mit einer lichten Höhe verstaut werden, die kleiner ist als bei einem Schnellkochtopf gemäß dem Stand der Technik.

Vorzugsweise beträgt der Schwenkwinkel des Bügels in etwa 180°. Er kann somit auch ein wenig größer oder kleiner sein. Entscheidend ist, dass der Bügel in den eingefahrenen Stellungen möglichst flach am Deckel anliegt.

Um Beschädigungen am Bügel in der eingeklappten Stellung zu vermeiden, sieht die Erfindung weiterhin vor, dass auf dem Deckel ein Knauf angeordnet ist, durch den eine Schwenkachse für den Bügel verläuft, wobei die Innenkontur des Bügels, der Außenkontur des Knaufs entspricht. Somit grenzt der Bügel in den eingeklappten Stellungen am Knauf an und bietet wenig Angriffsfläche.

Zu demselben Zweck ist vorgesehen, dass der Knauf von einem Sockel mit einer Ringfläche umgeben ist, auf der der Bügel in den beiden eingeklappten Stellungen aufliegt.

Weiterhin ist vorgesehen, dass die Oberfläche des Knaufs plan in die jeweils oben liegende Seitenfläche des Bügels übergeht, wenn dieser sich in einer der eingeklappten Stellungen befindet.

Damit der Bügel in den eingeklappten Stellungen leicht angehoben werden kann, um ihn dann greifen zu können, besitzt der Sockel mindestens eine randoffene Ausnehmung in einem Bereich, in dem sich die Bügelmitte befindet, wenn der Bügel auf der Ringfläche aufliegt.

Im Folgenden soll anhand eines Ausführungsbeispieles die Erfindung näher erläutert werden. Dazu zeigen:
- Fig. 1: einen erfindungsgemäßen Deckel mit einem Bügel, der sich in einer ersten eingeklappten Stellung befindet,
- Fig. 2: denselben Deckel, wobei sich der Bügel in einer aufgeklappten Stellung befindet, und
- Fig. 3: denselben Deckel, wobei sich der Bügel in einer zweiten eingeklappten Stellung befindet.

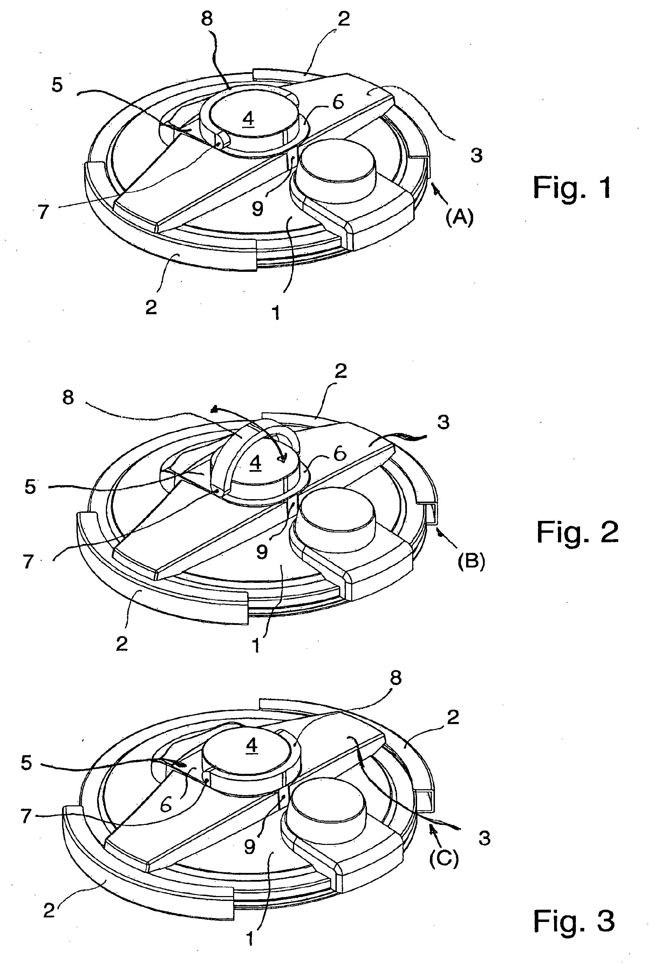

Da die Figuren 1 bis 3 jeweils denselben Deckel zeigen, gilt das Folgende jeweils für jede der Figuren, soweit nicht speziell auf die Bügelstellung eingegangen wird.

Der Deckel 1 hat eine kreisrunde Form und ist geeignet, auf einen hier nicht gezeigten Schnellkochtopf aufgesetzt zu werden, um diesen für den Kochvorgang druckdicht und hermetisch zu verschließen. Der Deckel 1 besitzt zwei am Rand des Deckels 1 angeordnete Klammern 2, die sich gegenüberliegen und jeweils einen ca. 80° breiten Randabschnitt abdecken. Die Klammern 2 haben jeweils einen eckigen C-förmigen Querschnitt.

Die Fig. 1 zeigt die Klammern 2 in einer eingefahrenen Position, der Schließposition (A), in der die Klammern 2 den Deckel 1 und einen hier nicht gezeigten Flansch am Schnellkochtopf umgreifen, wobei die Klammern 2 sowohl den Rand des Deckels 1 übergreifen als auch einen Flansch am Schnellkochtopf untergreifen, so dass der Deckel 1 an diesem gehalten wird.

Die Fig. 2 zeigt die Klammern 2 in einer ausgefahrenen Position, der Löseposition (B), bei der sie zumindest nicht mehr den Flansch untergreifen, so dass der Deckel 1 vom Schnellkochtopf gelöst werden kann.

Gemäß der Fig. 3 sind die Klammern 2 noch weiter aufgestellt, so dass auch hier der Deckel 1 vom Schnellkochtopf gelöst werden kann.

Die Klammern 2 werden von einem nicht näher dargestellten Verstellmechanismus betätigt, der vollständig von einer sich quer über die Oberseite des Deckels 1 erstreckenden länglichen Abdeckung 3 verdeckt ist. In der Mitte der Abdeckung 3 befindet sich ein Knauf 4 in Form einer Scheibe mit glatten Wänden, durch die quer eine Schwenkachse 7 verläuft. Der Bereich der Abdeckung 3 um den Knauf 4 bildet einen Sockel 5 mit einer an den Fuß des Knaufs 4 anschießenden Ringfläche 6.

An der Schwenkachse 7 ist ein halbkreisförmiger Bügel 8 befestigt, dessen Innendurchmesser dem Außendurchmesser des Knaufs 4 entspricht, so dass die Innenseite des Bügels 8 in den eingeklappten Stellungen gemäß Fig. 1 und 3 an den Knauf 4 angrenzt.

Die Stegbreite des Bügels 8 entspricht der Höhe des Knaufs 4, so dass die jeweilige Seitenfläche in den eingeklappten Stellungen des Bügels 8 gemäß Fig. 1 und 3 plan in die flache Oberseite des Knaufs 4 übergeht.

Der hier nicht näher dargestellte Verstellmechanismus, der mit der Schwenkachse gekoppelt ist, kann ein Ritzel-Zahnstangen-Mechanismus sein oder eine Kulissenführung beinhalten.

Jedenfalls werden durch ein Verschwenken des Bügels 8 von der in der in Fig. 1 gezeigten ersten eingeklappten Stellung, was einem Klappwinkel von 0° entspricht, über die aufgestellte Stellung (Fig. 2, Klappwinkel 90°) bis zur zweiten eingeklappten Stellung (Fig. 3, Klappwinkel 180°) die Klammern 2 radial nach außen von der Schließposition (A) in die Löseposition (B) und in eine weitere Löseposition (C) verstellt. Der Bügel 8 kann über die gesamten 180° des Klappwinkels frei bewegt werden. Insbesondere die 90°-Stellung ist eine labile Stellung, in der keine Arretierung für den Bügel 8 vorgesehen ist.

Die Kopplung zwischen dem Klappwinkel und dem Verstellweg der Klammern 2 kann im Bereich zwischen 90° und 180° schwächer sein als im Bereich zwischen 0° und 90°, und kann ggf. ganz wegfallen, so dass die Klammern 2 in der in der Fig. 2 gezeigten Löseposition (B) verbleiben, auch wenn der Bügel 8 vollständig in die zweite eingeklappte Stellung umgeklappt wird. Entscheidend ist aber, dass sich die Klammern 2 auch in der zweiten eingeklappten Stellung des Bügels 8 in einer ausgefahrenen Position befinden.

Zumindest an der Seite des Sockels 5, auf der sich der Bügel 8 in der zweiten eingeklappten Stellung befindet, besitzt der Sockel 5 eine randoffene fingerbreite Ausnehmung 9, die es erlaubt, zum Anheben des Bügels 8 mit der Fingerkuppe unter diesen zu gelangen.

### Bezugszeichenliste

- 1: Deckel
- 2: Klammern
- 3: Abdeckung
- 4: Knauf
- 5: Sockel

- 6: Ringfläche
- 7: Schwenkachse
- 8: Bügel
- 9: Ausnehmung

- A: Schließposition
- B: Löseposition
- C: weitere Löseposition

## Patentansprüche

1. Deckel für einen Schnellkochtopf mit zwei am Rand des Deckels (1) angeordneten Klammern (2), die in radialer Richtung gegenüber dem Deckel (1) zwischen einer eingefahrenen und einer ausgefahrenen Position verfahrbar sind, wobei in der eingefahrenen Position die Klammern (2) den Rand des Deckels (1) übergreifen und einen Flansch am Schnellkochtopf untergreifen, so dass der Deckel (1) am Schnellkochtopf gehalten ist, und in der ausgefahrenen Position die Klammern (2) vom Deckel (1) und dem Flansch beabstandet sind, so dass der Deckel (1) vom Schnellkochtopf entfernbar ist, mit einem Verstellmechanismus, um die Klammern zu verfahren, und mit einem auf den Verstellmechanismus einwirkenden Bügel (8), der auf dem Deckel (1) um eine parallel zur Deckelausdehnung verlaufende Schwenkachse (7) schwenkbar angeordnet ist, wobei der Bügel (8) eine erste eingeklappte Stellung, die der eingefahrenen Position der Klammern (2) entspricht, und eine aufgestellte Stellung einnehmen kann, die der ausgefahrenen Position der Klammern (2) entspricht und in der er von den Fingern einer Hand untergriffen werden kann, **dadurch gekennzeichnet, dass** der Bügel (8) eine zweite eingeklappte Stellung einnehmen kann, die der ersten Stellung gegenüberliegt und die der oder einer weiteren ausgefahrenen Position der Klammern (2) entspricht.

2. Deckel nach Anspruch 1, **dadurch gekennzeichnet, dass** der Schwenkwinkel des Bügels (8) in etwa 180° beträgt.

3. Deckel nach Anspruch 1 oder 2, **dadurch gekennzeichnet, dass** auf dem Deckel (1) ein Knauf (4) angeordnet ist, durch den eine Schwenkachse (7) für den Bügel (8) verläuft, wobei die Innenkontur des Bügels (8), der Außenkontur des Knaufs (4) entspricht.

4. Deckel nach Anspruch 3, **dadurch gekennzeichnet, dass** der Knauf (4) auf einem Sockel (5) mit einer Ringfläche (6) aufgesetzt ist, auf der der Bügel (8) in den beiden eingeklappten Stellungen aufliegt.

5. Deckel nach Anspruch 4, **dadurch gekennzeichnet, dass** die Oberfläche des Knaufs (4) plan in die jeweils oben liegende Seitenfläche des Bügels (8) übergeht, wenn dieser sich in einer der eingeklappten Stellungen befindet.

6. Deckel nach Anspruch 4, **dadurch gekennzeichnet, dass** der Sockel (5) mindestens eine randoffene Ausnehmung (9) in einem Bereich aufweist, in dem sich die Bügelmitte befindet, wenn der Bügel (8) auf der Ringfläche (6) aufliegt.

## Claims

1. A lid for a pressure cooker, having two clamps (2), which are arranged on the edge of the lid (1) and can be moved in a radial direction relative to the lid (1) between a retracted and an extended position, the clamps (2) in the retracted position fitting over the edge of the lid (1) and engaging under a flange on the pressure cooker so that the lid (1) is held on the pressure cooker, and the clamps (2) in the extended position being spaced apart from the lid (1) and the flange so that the lid (1) can be removed from the pressure cooker, having a moving mechanism to move the clamps and having a semicircular handle (8), which acts on the moving mechanism and is arranged on the lid (1) such that said handle can pivot about a pivot axis (7) running parallel to the extent of the lid, the semicircular handle (8) being able to assume a first, folded-in position, which corresponds to the retracted position of the clamps (2), and an erected position, which corresponds to the extended position of the clamps (2) and in which it can be grasped by the fingers of a hand, **characterised in that** the semicircular handle (8) can assume a second folded-in position, which is opposite the first position and corresponds to the or a further extended position of the clamps (2).

2. The lid according to Claim 1, **characterised in that** the pivot angle of the semicircular handle (8) is approximately 180°.

3. The lid according to Claim 1 or 2, **characterised in that** a knob (4) is arranged on the lid (1), through which a pivot axis (7) for the semicircular handle (8) runs, the inner contour of the semicircular handle (8) corresponding to the outer contour of the knob (4).

4. The lid according to Claim 3, **characterised in that** the knob (4) is placed on a base (5) having an annular face (6), on which the semicircular handle (8) rests when in either of the two folded-in positions.

5. The lid according to Claim 4, **characterised in that** the surface of the knob (4) merges flat into the respective upper side face of the semicircular handle (8) when the latter is in one of the folded-in positions.

6. The lid according to Claim 4, **characterised in that** the base (5) has at least one recess (9) open at its edge in a region in which the centre of the semicircular handle is situated when the semicircular handle (8) rests on the annular face (6).

## Revendications

1. Couvercle pour un autocuiseur avec deux mâchoires (2) disposées sur le bord du couvercle (1), qui peuvent être déplacées en direction radiale par rapport au couvercle (1) entre une position rentrée et une position sortie, pour lequel dans la position rentrée, les mâchoires (2) recouvrent le bord du couvercle (1) et saisissent par en-dessous une bride sur l'autocuiseur de sorte que le couvercle (1) est maintenu sur l'autocuiseur et dans la position sortie les mâchoires (2) sont distantes du couvercle (1) et de la bride de sorte que le couvercle (1) peut être démonté de l'autocuiseur, avec un mécanisme de réglage pour déplacer les mâchoires et avec un étrier (8) agissant sur le mécanisme de réglage, qui est disposé sur le couvercle (1) pouvant pivoter autour d'un axe de pivotement (7) passant parallèlement à l'extension du couvercle, pour lequel l'étrier (8) peut adopter une première position rabattue correspondant à la position rentrée des mâchoires (2) et une position relevée, qui correspond à la position sortie des mâchoires (2) et dans laquelle il peut être saisi par en-dessous à l'aide des doigts d'une main **caractérisé en ce que** l'étrier (8) peut adopter une deuxième position rabattue qui est opposée à la première position et qui correspond à la ou une autre position sortie des mâchoires (2).

2. Couvercle selon la revendication 1 **caractérisé en ce que** l'angle de pivotement de l'étrier (8) est à peu près de 180°.

3. Couvercle selon la revendication 1 ou 2 **caractérisé en ce qu'**un bouton (4) est disposé sur le couvercle (1) à travers lequel passe un axe de pivotement (7) pour l'étrier (8), pour lequel le contour intérieur de l'étrier (8) correspond au contour extérieur du bouton (4).

4. Couvercle selon la revendication 3 **caractérisé en ce que** le bouton (4) est posé sur un socle (5) avec une surface annulaire (6) sur laquelle repose l'étrier (8) dans les deux positions rabattues.

5. Couvercle selon la revendication 4 **caractérisé en ce que** la surface du bouton (4) passe de façon plane dans la surface latérale de l'étrier (8) située respectivement au-dessus, lorsque celui-ci se trouve dans une des positions rabattues.

6. Couvercle selon la revendication 4 **caractérisé en ce que** le socle (5) comporte au moins un évidement ouvert au bord (9) dans une zone dans laquelle se trouve le centre de l'étrier, lorsque l'étrier (8) repose sur la surface annulaire (6).
